# EUROPÄISCHE PATENTSCHRIFT

(11) **EP 2 997 621 B1**
(45) Veröffentlichungstag und Bekanntmachung des Hinweises auf die Patenterteilung: **09.01.2019**
(21) Anmeldenummer: 14724424.8
(22) Anmeldetag: 14.05.2014
(51) Int. Cl.: H01M 10/0525, H01M 10/058, H01M 4/04, H01M 4/38, H01M 4/48, H01M 4/485, H01M 4/58, H01M 10/42

(54) **AKTIVES LITHIUMRESERVOIR FÜR LITHIUMIONENBATTERIEN**
ACTIVE LITHIUM RESERVOIR FOR LITHIUM-ION BATTERIES
RÉSERVOIR DE LITHIUM ACTIF POUR BATTERIES LITHIUM-ION

(30) Priorität: 16.05.2013 DE 102013209140
(43) Veröffentlichungstag der Anmeldung: 23.03.2016
(73) Patentinhaber: Albemarle Germany GmbH, 65926 Frankfurt am Main (DE)
(72) Erfinder: WIETELMANN, Ulrich, 61381 Friedrichsdorf (DE); EMMEL, Ute, 65929 Frankfurt am Main (DE); SCHERER, Stefan, 64347 Griesheim (DE); HARTNIG, Christoph, 65817 Eppstein (DE)
(74) Vertreter: Rottmayer, Hans
(86) Internationale Anmeldenummer: PCT/EP2014/059841
(87) Internationale Veröffentlichungsnummer: WO 2014/184241

(56) Entgegenhaltungen:
- WO-A2-02/47185
- US-A- 4 006 034

## Beschreibung

Beschrieben werden Verfahren zur Bereitstellung eines aktiven Lithiumreservoirs für die Minderung irreversibler Anfangsverluste und als allgemeine Lithiumquelle von bzw. für Elektrodenmaterialien und Lithiumionenbatterien.

Lithiumionenbatterien werden im entladenen Zustand gebaut. Dies hat zum Vorteil, dass beide Elektroden luft- und wasserstabil sind. Das elektrochemisch aktive Lithium wird ausschließlich in Form des Kathodenmaterials (zumeist sind das Lithiummetalloxide wie beispielsweise Lithiumkobaltoxid, LiCoO₂) eingebracht. Da das Anodenmaterial (in den derzeitig kommerziellen Batterien ist das Graphit, in zukünftigen Bauarten können auch Legierungsmaterialien, beispielsweise Silicium- oder Zinn-basiert, verwendet werden) lithiumfrei ist, stammt alles Lithium aus dem Kathodenmaterial. In realen Batteriesystemen geht ein Teil dieses Lithiums durch irreversible Prozesse vor allem während des ersten Lade- Entladezyklusses verloren. Außerdem hat das klassische Lithium-Ionen-Batterie-Design mit lithiumfreiem Graphit als Anode den Nachteil, dass sämtliches Lithium mit dem lithiierten Kathodenmaterial eingebracht werden muss. Lithiumfreie potentielle Kathodenmaterialien (z.B. MnO₂) sind deshalb nicht verwendbar.

Im Falle von Graphit geht man davon aus, dass vor allem sauerstoffhaltige Oberflächengruppen bei der ersten Ladung irreversibel mit Lithium zu stabilen Salzen reagieren. Dieses Lithium geht für die nachfolgenden elektrochemischen (reversiblen) Lade-/Entladevorgänge verloren. Ähnlich ist es im Falle von Legierungsanoden, beispielsweise Silicium- oder Zinnanodenmaterialien. Oxidische Verunreinigungen konsumieren Lithium gemäß:

MO₂ + 4 Li → M + 2 Li₂O (1)

(M = Sn, Si u. a.)

Das in Form von Li₂O gebundene Lithium ist elektrochemisch nicht mehr aktiv. Beim Einsatz von Anodenmaterialien mit einem Potential < ca. 1,5 V wird ein weiterer Teil des Lithiums irreversibel für die Ausbildung einer Passivierungsschicht (sogenannte solid electrolyte interface, SEI) auf der negativen Elektrode verbraucht. Im Falle von Graphit gehen auf diese Art und Weise zwischen insgesamt etwa 7 und 20% des mit der positiven Masse (also dem Kathodenmaterial) eingebrachten Lithiums verloren. Im Falle von Zinn- oder Siliciumanoden liegen diese Verluste in der Regel noch höher. Das gemäß folgender Gleichung (2) entlithiierte, "übrigbleibende" Übergangsmetalloxid (beispielweise CoO₂) kann mangels aktiven Lithiums keinen Beitrag zur elektrochemischen Kapazität der galvanischen Zelle leisten:

2n LiCoO₂ + MOₙ → n Li₂O + M + 2n CoO₂ (2)

(M = Si, Sn etc.; n = 1 oder 2)

Es gibt viele Untersuchungen mit dem Ziel, diese irreversiblen Verluste des ersten Lade-/Entladezyklus zu minimieren oder ganz auszugleichen. Die Beschränkung kann überwunden werden, indem zusätzliches Lithium in metallischer Form, beispielsweise als stabilisiertes Metallpulver ("SLMP") in die Batteriezelle eingebracht wird (z.B. US2008283155A1; B. Meyer, F. Cassel, M. Yakovleva, Y. Gao, G. Au, Proc. Power Sourc. Conf. 2008, 43rd, 105-108). Dies hat aber zum Nachteil, dass die üblichen Verfahren zur Herstellung von Lithiumionenbatterien nicht durchgeführt werden können. So reagiert nach dem Stand der Technik passiviertes Lithium mit den Lufthauptbestandteilen Sauerstoff und Stickstoff. Die Kinetik dieser Reaktion ist zwar im Vergleich mit nicht-stabilisiertem Lithium sehr stark verlangsamt, jedoch ist bei längerer Exposition an Luft, auch unter Trockenraumbedingungen, eine Veränderung der Oberflächen und eine Abnahme des Metallgehaltes zu erwarten. Als noch gravierenderer Nachteil ist die äußerst heftige Reaktion von Li-Metallpulver mit dem häufig für die Elektrodenbereitung verwendeten Lösungsmittel N-Methylpyrrolidon (NMP) zu bewerten. Zwar konnten durch die Bereitstellung stabilisierter oder gecoateter Lithiumpulver bedeutsame Fortschritte in Richtung sicherer Handhabung getan werden, jedoch ist die Stabilität der nach dem Stand der Technik stabilisierten Lithiumpulver häufig nicht ausreichend, um unter Praxisbedingungen eine gefahrlose Verwendung von passiviertem Lithiumpulver im Falle NMP-basierter Suspensionsverfahren zu garantieren. Während ungecoatete oder mangelhaft gecoatete Metallpulver schon bei Raumtemperatur mit NMP bereits nach einer kurzen Induktionszeit heftig (run away) reagieren, findet dieser Prozess im Falle gecoateter Lithiumpulver erst bei erhöhten Temperaturen (beispielsweise 80 oder 100°C) statt. So wird in US2008/0283155 beschrieben, dass das mit Phosphorsäure gecoatete Lithiumpulver aus Beispiel 1 unmittelbar nach Zusammenmischen bei 30°C äußerst heftig (run away) reagiert, während ein zusätzlich mit einem Wachs gecoatetes Pulver bei 30°C in NMP mind. 24 h stabil ist. Die nach WO2012/052265 gecoateten Lithiumpulver sind bis etwa 80°C in NMP kinetisch stabil, sie zersetzen sich aber bei darüber hinausgehenden Temperaturen exotherm, z.T. unter run away-artigen Erscheinungen.

Kommt es zwischen Lithiummetall und NMP zur Reaktion, so muß damit gerechnet werden, dass große Energiemengen freigesetzt werden und die Reaktionsmischung sich unter Freisetzung von Dämpfen und Gasen heftig zersetzt. Im Falle der Herstellung einer Elektrodensuspension muss intensiv vermischt werden. Dieser Mischvorgang kann die schützende Passivierungsschicht schädigen und auf diese Art die Temperatur der beginnenden Zersetzungsreaktion (Tₒₙₛₑₜ) senken.

Die WO2011/157958A1 schlägt die Verwendung von Opfersalzen zur Kompensation der irreversiblen Verluste des ersten Ladevorganges vor, wobei das Opfersalz ein Kation E⁺ ausgewählt aus der Gruppe Li⁺, Na⁺, K⁺ oder Onium ist und das Anion redox(aktiv) ist ausgewählt aus der Gruppe Azid, Ketocarboxylat oder Hydrazid und wobei das Opfersalz ein höheres Potential als das Aktivmaterial der negativen Elektrode besitzt. Das Redoxpotential des Opfersalzes soll zwischen 2,0 und 4,6 V liegen.

Nachteile dieses Verfahrens sind, dass die Opfersalze z.T. toxisch und explosibel sind (Lithiumazid), die meisten nicht kommerziell verfügbar sind (Hydrazide und Ketocarboxylate) oder sie sich erst bei zu hohen Oxidationspotentialen zersetzen (> 4 V (Li₂C₃O₅, Li₂C₄O₆), z.T. erst > 4,5 V (Lithiumoxalat), also außerhalb des Spannungsbereiches gängiger Lithiumionenbatterien (M. Armand et al., Electrochem. Commun. 12 (2010) 1344-7).

Die DE102010044109A1 beschreibt ein galvanisches Element, das eine im Wesentlichen übergangsmetallfreie sauerstoffhaltige Konversionsanode enthält. Letztere enthält im geladenen Zustand Lithiumhydrid. Das Anion dieser Lithiumverbindung, das Hydridion, ist nur begrenzt oxidationsbeständig: Es wird beim Überschreiten eines Ladepotentials von ca. 0,71 V *vs* Li/Li⁺ zu elementarem Wasserstoff oxidiert. Um eine Zersetzung des Lithiumhydrids und ein Entweichen des für die Funktionsfähigkeit notwendigen Wasserstoffs der elektrochemischen Zelle mit sauerstoffhaltiger Konversionsanode zu verhindern (d.h. die Reversibilität gemäß der Gleichung 2 LiOH + 4 Li ⇔ 2 Li₂O + 2 LiH zu gewähren), ist es essentiell wichtig, dass die Anode nicht über ein Potential von ca. 0,71 V *vs* Li/Li⁺ hinaus geladen wird.

Zwar ist aus dem Dokument US 4,006,034 die Bereitstellung eines Kapazitätsüberschusses in Form einer Lithiumtegierung in der negativen Elektrode beim Laden der Zelle bekannt, indem dem Lithiumsulfid in der Elektrode andere Lithiumverbindungen wie Lithiumkarbid, Lithiumnitrid oder Lithiumhydrid zugesetzt werden, jedoch betrifft dies ein Verfahren zur Herstellung einer positiven Elektrode für die Benutzung in einer sekundären elektrochemischen Zelle, bei dem als Elektrolyt eine eutektische Salzmischung aus Alkali- oder Erdalkalisalzen im geschmolzenen Zustand, d.h. im Temperaturbereich oberhalb von 200°C benutzt wird.

Die Erfindung hat sich die Aufgabe gestellt, Verfahren zur Kompensation von irreversiblen Lithiumverlusten bei den ersten Ladezyklen von Lithiumionenbatterien mittels lithiumspendender Additive aufzuzeigen,
- welche kommerziell erhältliche lithiumspendende Additive verwendet,
- die ein genügend niedriges Oxidationspotential aufweisen, so dass sie für alle gängigen Kathodenmaterialien, d.h. solche mit elektrochemischen Potentialen im Bereich zwischen 2,5 und 6 V *vs* Li/Li⁺, einsetzbar sind.

Ferner soll das lithiumspendende Additiv in polaren aprotischen organischen Lösungsmitteln wie N-Methylpyrrolidon möglichst, d.h. bis mindestens ca. 50°C stabil sein und bei Überschreiten dieser Temperatur keine run away-artige Reaktion zeigen.

Erfindungsgemäß wird die Aufgabe dadurch gelöst, dass mindestens ein wasserstoffhaltiges lithiumspendendes Additiv ausgewählt aus der Gruppe Lithiumhydrid, Lithiumamid, Lithiumimid und Tetralithiumammoniumhydrid, eingesetzt wird, welches mit einem Zersetzungspotential zwischen 0,5 und 2 V vs. Li/Li⁺ in der Weise elektrisch kontaktiert wird, dass
a) das mindestens eine lithiumspendende Additiv mit mindestens einem Elektrodenmaterial gemischt wird, wobei die Lithiumfreisetzung unter gleichzeitiger Lithiierung eines dieser Elektrodenmaterialien innerhalb einer elektrochemischen Zelle erfolgt und/oder
b) das lithiumspendende Additiv als Mischung mit mindestens einem lithiumaufnahmefähigem Material in Form einer Elektrode in eine elektrochemischen Zelle eingebracht und dort eingesetzt wird und/oder
c) das lithiumspendende Additiv als Mischung mit mindestens einem lithiumaufnahmefähigem Material und einem Bindemittel auf ein Stromableitermaterial aufgebracht wird. Speziell geeignet sind wasserstoffhaltige Lithiumverbindungen, entweder gemischt oder in reiner Form, ausgewählt aus der Gruppe Lithiumhydrid, Lithiumamid, Lithiumimid und Tetralithiumammoniumhydrid. Diese Verbindungen zersetzen sich beim Überschreiten ihres Standardoxidationspotentials in einer elektrochemischen Zelle nach Anlegen des entsprechenden Potentials unter Freisetzung von Lithium und gasförmiger Nebenprodukte:

   LiₓN_{y}H_{z} --> x Li⁺ + x e⁻ + y/2 N₂ + z/2 H₂ (3)

   mit x = 1, 2 oder 4; y = 0 oder 1; z = 1 oder 2.

Bei den stickstoffhaltigen erfindungsgemäßen Verbindungen kann ein Teil des Stickstoffs auch in Form von ebenfalls gasförmigem Ammoniak (NH₃) freigesetzt werden. Für die erfindungsgemäße Funktionsweise als aktives Lithiumreservoir ist es entscheidend, dass die Polarisation der Elektrode, welche das lithiumspendende Additiv enthält, während des Formierprozesses der elektrochemischen Zelle (dies sind die ersten Lade- Entladezyklen), ausreichend hoch bemessen ist, um die Zersetzung des Additivs unter Lithiumfreisetzung gemäß der allgemeinen Formel (3) zu bewirken. Diese notwendige Polarisation entspricht mindestens dem Standardoxidationspotential im Sinne der Erfindung: Zersetzungspotential) des lithiumspendenden Additivs. In der folgenden Tabelle sind die Zersetzungspotential potentiale der erfindungsgemäßen reinen Verbindungen zusammengestellt:

| Lithiumspendendes Additiv | Standard -Gibbs-Energie ΔG°_{f} (kJ/mol) | Zersetzungspotential E *vs.* Li/Li⁺ (V) | Quelle / Bemerkung |
|---|---|---|---|
| LiH | -68,4 | 0,71 | Ihsan Barin, *Thermochemical Data of Pure Substances,* Part II, VCH Weinheim 1989. |
| LiNH₂ | | 1,16 | P. Chen, Phys.Chem.Chem.Phys. 2012 (14) 1596-1606. |
| Li2NH | | 0,70 | P. Chen, Phys.Chem.Chem.Phys. 2012 (14) 1596-1606. |
| Li₄NH | -206,7 | 0,54 | Crivello et. al, ICMPE, *Density functional study of Li₄NH and Li_{1.5}NH_{1.5} as intermediary compounds during hydrogenation of Li₃N,* 26.03.2010 |
| *Li₃N (Vergleichsbeisp.)* | -122,2 | *0,44* | A. Rabenau, Solid State lonics 6 (1982) 277-293. |

Die für die Zersetzung gemäß Gl. (3) im Praxisfall aufzuwendende Zersetzungsspannung kann in gewissen Grenzen schwanken. Sie ist u.a. von der Temperatur sowie der elektrischen Anbindung, d.h. der Güte der elektrischen Kontaktierung der lithiumspendenden Partikel, abhängig. Im konkreten Einzelfall kann also ein das oben genannte Standardoxidationspotential überschreitendes Potential notwendig sein, um das Lithium freizusetzen. Der Fachmann erkennt die Lithiumfreisetzung u.a. an der begleitenden Gasbildung und dem Stromverbrauch und kann so den geeigneten Potentialbereich einstellen.

Die erfindungsgemäßen lithiumspendenden Additive können in verschiedener Art und Weise in eine elektrochemische Zelle mit aprotischem Elektrolyten eingebracht werden. Die erste Möglichkeit besteht darin, feste Elektrodenmaterialien (Anoden- oder Kathodenmaterialien) in Abwesenheit von einem Lösungsmittel mit dem Additiv und weiteren Komponenten, z.B. Leitfähigkeitsadditiven (wie Graphit oder Ruß) sowie Bindern (wie PTFE-Pulver) zu mischen und diese Mischung dann durch ein mechanisches Verfahren (Pressen, Kalandrieren) auf eine Stromableiterfolie aufzubringen.

Es sind jedoch auch Suspensions- (d.h. Dispergiermittel-gebundene) Prozesse möglich. Die Auswahl des geeigneten Dispergiermittels, in der Regel ein organisches, aprotisches Lösemittel, richtet sich u.a. nach dem verwendeten Bindemittel. Soll beispielsweise als Binder Polyisobutylen verwendet werden, so können inerte, d.h. wenig reaktionsfreudige Kohlenwasserstoffe (sowohl ungesättigte wie gesättigte Verbindungen wie Toluol, Xylol, Hexan oder Dekan) eingesetzt werden. Bei der Verwendung von Polyvinylidendifluorid (PVdF) müssen polare Lösungsmittel, beispielsweise N-Methylpyrrolidon (NMP) oder Aceton verwendet werden, da sich das genannte fluorierte Bindemittel in unpolaren Lösemitteln wie Kohlenwasserstoffen nicht löst. Es wurde überraschend gefunden, dass beispielsweise Lithiumhydrid weniger heftig mit NMP reagiert als dies Lithiummetall oder Lithiumnitrid tun.

Um dies zu demonstrieren, wurden Mischungen aus trockenem NMP (Wassergehalt 164 ppm) und gecoatetem Lithiummetallpulver (hergestellt nach der WO2012/052265) sowie pulverförmigen Lithiumsalzen unter Inertgasatmosphäre in GC-Glasfläschchen abgefüllt und in Stufen erhitzt. Dabei wurden folgende Beobachtungen gemacht:

| Lithiumspendendes Additiv | 2 h ca. 25°C | 2 h 50°C | 1 h 80°C | 1 h 100°C | 1 h 120°C |
|---|---|---|---|---|---|
| Gecoatetes Lithiumpulver (Vergleichsbeispiel) | keine Veränderung | keine Veränderung | keine Veränderung | sehr heftige Reaktion unter Gasbildung, schwarze Mischung | nicht anwendbar |
| Lithiumhydrid | keine Veränderung | keine Veränderung | keine Veränderung | keine Veränderung | Gelbfärbung, nach Abkühlen fest; keine Gasbildung |
| Lithiumamid | keine Veränderung | Gelbfärbung, flüssig | Gelbfärbung, nach Abkühlen fest; keine Gasbildung | nicht anwendbar | nicht anwendbar |
| Lithiumimid | keine Veränderung | Gelbfärbung, flüssig | Gelbfärbung, nach Abkühlen fest; keine Gasbildung | nicht anwendbar | nicht anwendbar |
| Tetralithiumammoniumhydrid | keine Veränderung | Gelbfärbung, flüssig | Gelbfärbung, nach Abkühlen fest; keine Gasbildung | nicht anwendbar | nicht anwendbar |
| Lithiumnitrid (Vergleichsbeispiel) | reagiert sofort; Selbsterhitzung auf ca. 80°C | nicht anwendbar | nicht anwendbar | nicht anwendbar | nicht anwendbar |

Lithiumnitrid reagiert bereits bei Raumtemperatur (RT) mit NMP, jedoch ohne dass Gase gebildet werden oder ein nennenswerter Druckaufbau im geschlossenen System zu beobachten wäre. Die Mischungen mit den Li-Verbindungen Lithiumamid, -imid und Tetralithiumammoniumhydrid sind dagegen deutlich stabiler. Während bei Raumtemperatur (RT) über Stunden keine sichtbaren Veränderungen stattfinden und insbesondere auch keine Gasbildung erfolgt, beobachtet man ab einer Lagertemperatur von 50°C eine Gelbfärbung der Mischung. Diese bleibt aber flüssig, auch nach Abkühlung auf RT. Überraschenderweise erweist sich die Lithiumhydridhaltige Suspension als am stabilsten. Selbst bei 100°C ist keine sichtbare Veränderung zu beobachten und die Mischung bleibt flüssig, auch nach Abkühlen auf RT. Bei einer Lagertemperatur von 120°C verfärbt sich die Mischung gelblich und das Lösemittel scheint zu polymerisieren: nach Abkühlung auf RT liegt ein gelblicher, polymerartiger Feststoff vor. Der Zersetzungsprozess wird von keiner Gasbildung begleitet, d.h. im geschlossenen Gefäß wird kein Druckaufbau beobachtet.

Das gecoatete Lithiummetallpulver reagiert bei Temperaturen ab ca. 100°C sehr heftig, und zwar unter Bildung von Dämpfen und Permanentgasen. In geschlossenen Behältnissen ist mit einem entsprechenden plötzlichen Druckaufbau zu rechnen. Überraschend werden dagegen bei allen erfindungsgemäßen lithiumspendenden Additiven keine Gase gebildet und die Zersetzung erfolgt durch Polymerisation des Lösemittels unter Freisetzung nur milder Reaktionswärmen.

Die Zersetzungswärmen wurden mittels DSC ("differential scanning calorimetry") bestimmt. Es kam eine Apparatur der Firma *Systag,* Schweiz (das Radex-System) zum Einsatz. In die Probengefäße wurden unter Schutzgasatmosphäre etwa 2 g NMP sowie 100 mg des erfindungsgemäßen lithiumspendenden Additivs eingewogen. Diese Proben wurden mit einer Aufheizrate von 45 K/h bis zu einer Endtemperatur von 180°C erhitzt. Die Temperatur, bei der eine exotherme thermische Zersetzung beginnt, wird als Tₒₙₛₑₜ bezeichnet.

| Mischung von NMP mit | Tₒₙₛₑₜ (°C) | ΔH_{dec} (J/g Mischung) | Druck nach Abkühlung auf RT (bar) |
|---|---|---|---|
| gecoatetem Li-Pulver (Vergleichsbeispiel) | 90 | 380 | 6 |
| LiNH₂ | ca. 55 | ca. 80 | keiner |
| Li₂NH | 75 | 89 | keiner |
| LiH | 95 | 65 | keiner |

Man erkennt, dass im Kontakt mit NMP Lithiumhydrid am sichersten zu handhaben ist: die Zersetzungsreaktion beginnt bei höchsten Temperaturen, sie ist am wenigsten exotherm und es werden keine Gase gebildet. Deshalb ist bei der Elektrodenherstellung in NMP-Suspension die Verwendung von Lithiumhydridpulver bevorzugt. Werden weniger reaktive Lösungsmittel wie z.B. Kohlenwasserstoffe oder Ether für die Suspensionsherstellung verwendet, so können auch die anderen erfindungsgemäßen lithiumspendenden Additive Verwendung finden.

Das oder die lithiumspendende(n) Additiv(e) wird oder werden als Pulver eingesetzt. Die pulverförmigen Partikel haben einen Durchmesser von maximal 500 µm, bevorzugt maximal 200 µm. Ganz besonders bevorzugt liegt der Median der Partikelgrößenverteilung (D₅₀) im Bereich zwischen 1 und 100 µm, wobei vorzugsweise Lithiumhydridpulver eingesetzt wird.

Die erfindungsgemäßen lithiumspendenden Additive können zur Lithiierung von elektrochemisch aktiven Anodenmaterialien, z.B. Graphit-, Legierungs- Insertions- oder Konversionsmaterialien in Lithiumionenbatterien verwendet werden. Dieser Lithiierungsprozess kann auf Materialebene außerhalb einer elektrochemischen Zelle ("*ex situ*") oder bevorzugt innerhalb einer elektrochemischen Zelle ("*in situ*") stattfinden.

Bei der Lithiierung außerhalb einer elektrochemischen Zelle wird ein elektrochemisch aktives Material mit einem höherliegenden Zersetzungs potential als es das verwendete lithiumspendende Additiv besitzt, mit diesem lithiumspendenden Additiv in Kontakt gebracht. Dieser Prozess erfolgt bevorzugt unter Inertgas (Argon, Stickstoff) oder trockener Luft (Taupunkt maximal -30°C) bei Umgebungstemperaturen oder in der Wärme, bevorzugt im Temperaturbereich zwischen etwa 20 und 80°C. Um die Umsetzung zu vervollständigen, wird die Mischung aus einem oder mehreren Elektrodenmaterial(ien) und dem lithiumspendenden Additiv unter Homogenisier- oder Mahlbedingungen, entweder in Lösungsmittelsuspension oder in Form der Feststoffmischung vorgenommen. Besonders bevorzugt ist es, die Mischung aus Elektrodenmaterial und lithiumspendendem Additiv unter Mahlbedingungen zu kontaktieren. Geeignet sind für diesen Prozess Stab- Schwing- Prall- oder Kugelmühlen nach Stand der Technik. Der Mahlprozess kann in Anwesenheit oder Abwesenheit eines aprotischen Lösungsmittels, beispielsweise NMP, Ethern oder Kohlenwasserstoffen vorgenommen werden. Bei lösemittelunterstützten Vermahlungen ist die Verwendung von Kohlenwasserstoffen (aromatische oder aliphatische mit Siedepunkten zwischen ca. 50 und 300 °C, auch handelsübliche Gemische), bevorzugt.

Es sind auch andere Formen der mechanischen Aktivierung anwendbar. Beispielsweise kann die Umsetzung zwischen den Feststoffpartikeln durch Einstrahlen von Ultraschall oder durch Mikrowellen gefördert werden. Die Ultraschallbehandlung erfolgt bevorzugt in Suspension unter Verwendung eines aprotischen flüssigen Suspendierungsmittels.

Als Beispiel für eine solche rein chemische Umsetzung wird die Reaktion eines Übergangsmetalloxids mit Lithiumhydrid formuliert:

LiH + 2 MnO₂ → LiMn₂O₄ + ½ H₂ (4)

Die andere Verfahrensvariante, d.h. die Lithiumfreisetzung und Lithiierung in der elektrochemischen Zelle (*in situ*), erfolgt beim ersten Ladevorgang oder bei den ersten Lade- Entlade-Zyklen. Dazu wird die Mischung aus Elektrodenmaterial und erfindungsgemäßem lithiumspendendem Additiv, gegebenenfalls unter Verwendung weiterer Hilfsstoffe (wie Bindern und/oder leitfähigkeitsverbessernden Additiven), auf eine Stromableiterfolie aufgebracht (Gießverfahren, Spincoating, air-brush-Verfahren etc.). Falls dieser Prozess unter Verwendung eines Lösemittels (beispielsweise NMP oder Kohlenwasserstoffe) durchgeführt wird (also Suspensionsgießverfahren), so wird in einem folgenden Schritt zunächst dieses Lösemittel entfernt. Die getrocknete Vorelektrode kann sodann mechanisch weiterbehandelt werden (z.B. Kalandrieren) und dann nach Stand der Technik in einer Batteriezelle verbaut werden. Im betrachteten Fall erfolgt die Freisetzung des Lithiums aus dem erfindungsgemäßen lithiumspendenden Additiv vollständig oder zumindest überwiegend erst beim Überschreiten des Ladepotentials über den Stabilitätsbereich des verwendeten Additivs hinaus. Dieses Potential (die sogenannte Zersetzungsspannung) beträgt beispielsweise bei der Verwendung von Lithiumhydrid ca. 0,71 V *vs.* Li/Li⁺. Da dieser sogenannte Formierprozess von einer Gasbildung begleitet wird, ist es bevorzugt, mindestens beim ersten oder bei den ersten bis ca. 5 Zyklen für Druckausgleich zu sorgen, d.h. die ersten Zyklen werden mit unverschlossenem Zellgehäuse gefahren. Erst nach vollständiger Entwicklung und Abführung der gasförmigen Beiprodukte wird die elektrochemische Zelle verschlossen. Als gasförmige Beiprodukte bilden sich je nach verwendetem lithiumspendenden Additiv Wasserstoff, Ammoniak und/oder Stickstoff. Beispielsweise verläuft die oxidative Zersetzung von Lithiumhydrid bei einem Potential von ≥ ca. 0,71 V *vs.* Li/Li⁺ gemäß folgender Gleichung:

LiH → Li⁺ + e⁻ + ½ H₂ (5)

Um eine möglichst gute elektrische Kontaktierung des lithiumspendenden Additivs zu gewährleisten, ist es bevorzugt, flüssige oder gelförmige Elektrolyte zu verwenden.

Da sich die erfindungsgemäßen Additive bei Potentialen unter 2 V *vs.* Li/Li⁺ zersetzen, können für die positive Elektrode (Kathode) praktisch alle bekannten Kathodenmaterialien, speziell solche mit Redoxpotentialen von ≥ 2 V, bevorzugt ≥ 2,5 V *vs.* Li/Li⁺ verwendet werden. Unter anderem können als Kathodenmaterialien verwendet werden Metalloxide (z.B. MnO₂, Vanadiumoxide), Lithiummetalloxide (z.B. LiCoO₂, LiMn₂O₄, LiMnO_{1,5}Ni_{0,5}, Li(Mn,Co,Ni)O₂ etc.) und Lithiummetallphosphate (LiFePO₄, LiMnPO₄, LiCoPO₄ etc). Für die negative Elektrode (Anode) können u.a. kohlenstoffbasierte Materialien (Graphite, Graphen, Kokskohle etc.), legierungsfähige Stoffe (beispielsweise Si-, Sn-, Al- oder Co-basiert) oder Übergangsmetallnitride verwendet werden.

Die aufzuwendende Menge an erfindungsmäßen Additiven ist fallspezifisch; sie richtet sich hauptsächlich nach den verwendeten Elektrodenaktivmaterialien und dem zum Einsatz kommenden Elektrolyten. Je nach verwendetem Elektrolyten werden nämlich für die SEI-Bildung unterschiedliche Lithiummengen benötigt. Die Gesamtmenge an lithiumspendendem Additiv liegt bevorzugt maximal so hoch wie es der maximalen Lithium-Aufnahmekapazität der Elektrodenmaterialien durch Intercalation (d.h. reversible Lithiumeinlagerung in das betrachtete Elektrodenmaterial), Legierungsbildung oder sonstige Absorption (z.B. irreversible Reaktion mit Oberflächengruppen) entspricht plus der Lithiummenge, die für die Schutzschichtbildung ("SEI-Bildung") vor allem auf der negativen Elektrode (Anode) irreversibel verbraucht wird.

## Patentansprüche

1. Verfahren zur Bereitstellung eines aktiven Lithiumreservoirs in Lithiumionenbatterien mit flüssigem oder gelförmigen Elektrolyt, Kathodenmaterialien ausgewählt aus der Gruppe bestehend aus. Metalloxiden. Lithiummetalloxiden und Lithiummetallphosphaten sowie negativer Elektrode aus kohlenstoffbasierte Materialien, mit Lithium legierungsfähigen Stoffen oder Übergangsmetallnitriden, **dadurch gekennzeichnet, dass** mindestens ein wasserstoffhaltiges lithiumspendendes Additiv ausgewählt aus der Gruppe Lithiumhydrid, Lithiumamid, Lithiumimid und Tetralithiumammoniumhydrid, eingesetzt wird, welches mit einem Zersetzungspotential zwischen 0,5 und 2 V vs. Li/Li⁺in der Weise elektrisch kontaktiert wird, dass a) das mindestens eine lithiumspendende Additiv mit mindestens einem Elektrodenmaterial gemischt wird, wobei die Lithiumfreisetzung unter gleichzeitiger Lithiierung eines dieser Elektrodenmaterialien innerhalb einer elektrochemischen Zelle erfolgt oder
/und b) das lithiumspendende Additiv als Mischung mit mindestens einem lithiumaufnahmefähigem Material in Form einer Elektrode in eine elektrochemischen Zelle eingebracht und dort eingesetzt wird oder/und c) das lithiumspendende Additiv als Mischung mit mindestens einem lithiumaufnahmefähigem Material und einem Bindemittel auf ein Stromableitermaterial aufgebracht wird.

2. Verfahren nach Anspruch 1, **dadurch gekennzeichnet, dass** mindestens 1 Lade- Entladezyklus mit geöffnetem Zellgehäuse gefahren wird.

3. Verfahren nach Anspruch 1, **dadurch gekennzeichnet, dass** ein elektrochemisch aktives Material mit einem Zersetzungspotential oberhalb des eingesetzten lithiumspendenden Additiv mit einem Zersetzungspotential zwischen 0,5 und 2 V *vs.* Li/Li⁺ unter Inertgas oder trockener Luft mit einem Taupunkt von maximal -30°C bei Umgebungstemperaturen oder in der Wärme, zur Lithiierung außerhalb einer elektrochemischen Zelle in Kontakt gebracht wird.

4. Verfahren nach Anspruch 3, **dadurch gekennzeichnet, dass** das Elektrodenmaterial und das lithiumspendende Additiv unter Mahlbedingungen in trockener Form oder in Anwesenheit eines flüssigen Dispergiermittels in Kontakt gebracht werden.

5. Verfahren nach einem der Ansprüche 1 bis 4, **dadurch gekennzeichnet, dass** maximal so viel an lithiumspendenden Additiven eingesetzt wird, wie es der maximalen Lithium-Aufnahmekapazität der Elektrodenmaterialien durch Interkalation, Legierungsbildung oder sonstige Absorption entspricht plus der Lithiummenge, die für die Schutzschichtbildung vor allem auf der negativen Elektrode irreversibel verbraucht wird.

6. Verfahren nach einem der Ansprüche 1 bis 5, **dadurch gekennzeichnet, dass** die lithiumspendenden Additive als Pulver enthaltend Partikel mit einem Durchmesser von maximal 500 µm eingesetzt werden.

7. Verfahren nach einem der Ansprüche 1 bis 6, **dadurch gekennzeichnet, dass** der Median der Partikelgrößenverteilung (D₅₀) des lithiumspendenden Additivs im Bereich zwischen 1 und 100 µm liegt.

8. Verfahren nach einem der Ansprüche 1 bis 7, **dadurch gekennzeichnet, dass** als lithiumspendendes Additiv Lithiumhydridpulver mit einem Median der Partikelgrößenverteilung (D₅₀) im Bereich zwischen 1 und 100 µm eingesetzt wird.

## Claims

1. A method for producing an active lithium reservoir in lithium ion batteries with liquid or gel type electrolyte, cathode materials selected from the group consisting of metal oxides, lithium metal oxides and lithium metal phosphates and negative electrodes made of carbon-based materials, substances capable of forming an alloy with lithium or transition metal nitrides, **characterized in that** at least one hydrogen-containing, lithium-donating additive selected from the group of lithium hydride, lithium amide, lithium imide and tetralithium ammonium hydride is used, which is electrically contacted with a decomposition potential between 0,5 and 2 V versus Li/Li⁺ in such a manner that a) the at least one lithium-donating additive is mixed with at least one electrode material, wherein the lithium release takes place under simultaneous lithiation of one of these electrode materials inside of an electrochemical cell or /and b) the lithium-donating additive is introduced as a mixture with at least one material capable of accepting lithium in the form of an electrode into an electrochemical cell and used there, and c) the lithium-donating additive is applied as a mixture with at least one material capable of accepting lithium and a binder to a current conductor material.

2. The method according to claim 1, **characterized in that** at least one charge-discharge cycle is run with the cell housing open.

3. The method according to claim 1, **characterized in that** an electrochemically active material with a decomposition potential above that of the lithium-donating additive used, with a decomposition potential between 0,5 and 2 V versus Li/Li⁺ under inert gas or dry air with a dew point of maximally -30°C at ambient temperature or in the presence of heat, is brought into contact outside of an electrochemical cell for lithiation.

4. The method according to claim 3, **characterized in that** the electrode material and the lithium-donating additive are contacted under grinding conditions in dry form or in the presence of a liquid dispersant.

5. The method according to one of claims 1 to 4, **characterized in that** maximally a quantity of lithium-donating additives is used that corresponds to the maximum capacity of the electrode material for lithium uptake by intercalation, alloy formation of other absorption plus the quantity of lithium that is irreversibly consumed for formation of the protective layer, principally on the negative electrode.

6. The method according to one of claims 1 to 5, **characterized in that** the lithium-donating additive is used as a powder containing particles with a maximum diameter of 500 µm.

7. The method according to one of claims 1 to 6, **characterized in that** the median of the particle size distribution (D₅₀) of the lithium-donating additive is in the range between 1 and 100 µm.

8. The method according to one of claims 1 to 7, **characterized in that** the lithium-donating additive used is lithium hydride powder with a median of the particle size distribution (D₅₀) of the lithium-donating additive in the range between 1 and 100 µm.

## Revendications

1. Procédé d'approvisionnement d'un réservoir de lithium actif dans des batteries lithium-ion avec un électrolyte liquide ou en forme de gel, des matériaux cathodiques choisis dans le groupe constitué des oxydes métalliques, des oxydes métalliques de lithium et des phosphates métalliques de lithium ainsi que des électrodes négatives constituées de matériaux à base de carbone, avec des substances qui peuvent s'allier au lithium ou des nitrures de métaux de transition, **caractérisé en ce qu'**au moins un additif distributeur de lithium et contenant de l'hydrogène choisi dans le groupe formé d'un hydrure de lithium, d'un amide de lithium, d'un imide de lithium et d'un nitrure de tétralithiumammonium est utilisé, qui est mis en contact électriquement avec un potentiel de décomposition entre 0,5 et 2 V vis-à-vis de Li/Li⁺ de manière a) qu'au moins un additif distributeur de lithium soit mélangé avec au moins un matériau d'électrode, dans lequel la libération de lithium se produit tout en lithifiant simultanément un de ces matériaux d'électrode à l'intérieur d'un élément électrochimique et/ou b) que l'additif distributeur de lithium soit chargé dans un élément électrochimique sous la forme d'un mélange avec au moins un matériau absorbeur de lithium sous la forme d'une électrode et y soit utilisé et/ou c) que l'additif distributeur de lithium soit appliqué sur un matériau électroconducteur sous la forme d'un mélange avec au moins un matériau absorbeur de lithium et un agent liant.

2. Procédé selon la revendication 1, **caractérisé en ce qu'**au moins un cycle de charge-décharge est effectué avec un boîtier d'élément ouvert.

3. Procédé selon la revendication 1, **caractérisé en ce qu'**un matériau électrochimiquement actif avec un potentiel de décomposition supérieur à celui de l'additif distributeur de lithium utilisé est amené en contact avec un potentiel de décomposition entre 0,5 et 2 V vis-à-vis de Li/Li⁺ sous gaz inerte ou air séché avec un point de rosée au maximum de - 30 °C aux températures ambiantes ou à la chaleur pour effectuer la lithiation en dehors d'un élément électrochimique.

4. Procédé selon la revendication 3, **caractérisé en ce que** le matériau d'électrode et l'additif distributeur de lithium sont amenés en contact dans des conditions de broyage sous forme séchée ou en présence d'un agent dispersant liquide.

5. Procédé selon l'une quelconque des revendications 1 à 4, **caractérisé en ce que** l'on utilise au maximum autant d'additifs distributeurs de lithium que cela correspond à la capacité d'absorption de lithium maximale des matériaux d'électrodes par intercalage, formation d'alliage ou autre absorption plus la quantité de lithium qui est consommée de manière irréversible pour la formation de couches de protection surtout sur les électrodes négatives.

6. Procédé selon l'une quelconque des revendications 1 à 5, **caractérisé en ce que** les additifs distributeurs de lithium sont utilisés sous la forme de poudre contenant des particules avec un diamètre de 500 µm au maximum.

7. Procédé selon l'une quelconque des revendications 1 à 6, **caractérisé en ce que** la moyenne de la distribution de tailles particulaires (D₅₀) de l'additif distributeur de lithium se situe dans la plage comprise entre 1 et 100 µm.

8. Procédé selon l'une quelconque des revendications 1 à 7, **caractérisé en ce que** l'on utilise comme additif distributeur de lithium de la poudre d'hydrure de lithium avec une moyenne de la distribution de tailles particulaires (D₅₀) dans la plage comprise entre 1 et 100 µm.
